# EUROPEAN PATENT SPECIFICATION

(11) **EP 1 058 423 B1**
(45) Date of publication and mention of the grant of the patent: **01.12.2004**
(21) Application number: 99959937.6
(22) Date of filing: 21.12.1999
(51) Int. Cl.: H04L 12/54, H04L 12/58, G06F 13/00, G06F 17/60

(54) **MESSAGE DELIVERY SYSTEM**
NACHRICHTENABLIEFERUNGSSYSTEM
SYSTEME DE REMISE DE MESSAGES

(30) Priority: 21.12.1998 JP 36291898
(43) Date of publication of application: 06.12.2000
(73) Proprietor: MATSUSHITA ELECTRIC INDUSTRIAL CO., LTD., Kadoma-shi, Osaka 571-0050 (JP); Panasonic Mobile Communications Co., Ltd., Yokohama-shi, Kanagawa 223-8639 (JP); NTT DoCoMo, Inc., Tokyo 100-6150 (JP)
(72) Inventor: Hirose, Takako, Hirakata-shi, Osaka 573-0171 (JP); Wada, Hiromi, Neyagawa-shi, Osaka 572-0841 (JP); Tanaka, Yasunori, Takatsuki-shi, Osaka 559-1118 (JP); Kato, Atsunobu, Ebina-shi, Kanagawa 243-0411 (JP); Nakatsuchi, Masaharu, Yokohama-shi, Kanagawa 221-0861 (JP); Sasaki, Keizaburo, Yokosuka-shi, Kanagawa 238-0006 (JP)
(74) Representative: Grünecker, Kinkeldey, Stockmair & Schwanhäusser Anwaltssozietät
(86) International application number: PCT/JP1999/007171
(87) International publication number: WO 2000/038373

(56) References cited:
- WO-A-97/08906
- CA-A- 2 240 972
- JP-A- 2 108 346
- JP-A- 6 232 976
- JP-A- 10 084 416
- JP-A- 10 164 124
- JP-A- 11 203 216
- MYERS ET AL: "RFC 1939: Post Office Protocol Version 3" NETWORK WORKING GROUP REQUEST FOR COMMENTS, XX, XX, May 1996 (1996-05), pages 1-20, XP002197697
- CRISPIN M: "Internet Message Access Protocol - version 4rev1" NETWORK WORKING GROUP, December 1996 (1996-12), XP002122132
- GRAY T: "Messages Access Paradigms and Protocols" INTERNET CITATION: WWW.IMAP.ORG, 28 August 1995 (1995-08-28), XP002208009

## Description

### Technical Field

The present invention relates to a message delivery system from a server to a client and, more particularly, a PUSH type message delivery.

### Background Art

In recent years, with the progress of advanced information, the user can acquire various information immediately by designating an address to be accessed via the Internet. As the data transfer protocol between the client and the server, HTTP (Hyper Text Transfer Protocol) has been widely spread. According to HTTP, since the server responds to the acquiring request issued from the client and informs the client of the requested information, the user can acquire the information.

In addition to such PULL type service, the PUSH type service that informs automatically the user of various information from the communication enterprise or the provider, which offers the service, can be now employed. The PUSH type service can be employed in the mail service. This service informs the user of the effect when the mail arrives at the server, and thus the user can grasp the receiving situation of the mail and receives the mail without user's periodical access to the server.

When the server unit receives the transmittal acknowledge at the network level of the lower layer after the message transmission, it regards that the transmission has been completed and then deletes the stored message. In this case, if the client system has already been received the data of the maximum receivable size, etc., it failed to receive the message as the application but the communication of the message data at the network level has succeeded. As a result, there is such a problem that the deleting process is performed on the server unit side and thus the user fails to acquire the message. Especially, in the case of the client system via the radio network such as the mobile terminal, since there are limitations such as small memory capacity, etc., it may be supposed that such problem frequently occurs.

The present invention has been made to overcome the above problem, and it is an object of the present invention to provide a message delivery system which does not generate the lack of the message, by making possible to issue an instruction to the server unit from the client system to process a message, which is received by the client system, at a timing when the client system has completed to receive the message as the application, and then performing the message process on the server unit side in compliance with the instruction, while issuing another instruction to the server unit from the client system to transmit a succeeding message.

Document "RFC1939: Post Office Protocol version 3" discloses that the accumulation of messages may result in the user's inability to receive new messages into the maildrop, and suggests to use some policies to solve the problem. The document also emphasises that it is important not to delete messages in the event of abnormal connection termination because the client may not have successfully received or stored a message.

Document "Internet Message Access Protocol - version 4rev1" discloses that a message can be deleted or retrieved from the mail box of the server unit according to the client's commands. For example, the "expunge" command can permanently remove from the currently selected mail box all messages that have the "deleted" flag set; the "fetch" command is used to retrieve data associated with a message in the mail box.

### Disclosure of the Invention

In order to overcome the above subject, a message delivery system of the present invention having a client system that acquires a delivery message from a server unit by requesting to transmit the delivery message in the server unit in compliance with a notification from the server unit, wherein the client system includes a received message storing means for storing delivery message information received from the server unit, and an instruction and message acquiring requesting means for informing the server unit of a succeeding message acquiring request, if a succeeding message is present, and a process instructing request for the delivery message whose reception is completed when reception of the delivery message from the server unit is completed, and the server unit includes a delivery message storing means for storing the delivery message to be transmitted to the client system, and message processing means for transmitting a succeeding message stored in the delivery message storing means to the client system in compliance with a request from the client system and then processing the delivery message whose reception is completed.

In the above message delivery system, it is preferable in a message delivery system of the present invention that, by instructing to delete from the delivery message storing means of the server unit as the process for the delivery message whose reception is completed, the message processing means deletes the delivery message, which is informed by the client system and whose reception is completed, from the delivery message storing means in compliance with an instruction from the client system.

In addition, in the above message delivery system, it is preferable in a message delivery system of the present invention that the server unit holds the delivery message stored in the delivery message storing means until its deletion is instructed by the client system, and then transmits the same delivery message once again when it receives an acquiring request from the client system.

Further, in the above message delivery system, it is preferable in a message delivery system of the present invention that the server unit further includes a processed message storing means for storing the messages delivered to the client system, and, by instructing to move from the delivery message storing means of the server unit as the process for the delivery message whose reception is completed, the message processing means moves the delivery message, which is informed by the client system and whose reception is completed, from the delivery message storing means to the processed message storing means in compliance with an instruction from the client system.

Furthermore, in the above message delivery system, it is preferable in a message delivery system of the present invention that the server unit holds the delivery message stored in the delivery message storing means until its movement is instructed by the client system, and then transmits the same delivery message once again when it receives an acquiring request from the client system.

Moreover, in the above message delivery system, preferably a message delivery system of the present invention further comprises a message instruction requesting means for informing the server unit of only a process instructing request for the delivery message whose reception is completed when there is no succeeding message.

### Brief Description of the Drawings

FIG. 1 is a block diagram showing a first embodiment of a message delivery system according to the present invention.
FIG. 2 is a block diagram showing a second embodiment of a message delivery system according to the present invention.
FIG. 3 is a flowchart showing concrete procedures of a control operation of a client system in the message delivery system shown in FIG. 1.
FIG. 4 is a flowchart showing concrete procedures of a control operation of a server unit in the message delivery system shown in FIG. 1.
FIG. 5 is a sequence view showing an example of a message acquiring scheme in the message delivery system shown in FIG. 1.
FIG. 6 is a view showing an example of data formats of a message acquiring request used in the message delivery system shown in FIG. 1.
FIG. 7 is a view showing an example of a data format of a message acquiring response used in the message delivery system shown in FIG. 1.

### Best Mode for Carrying Out the Invention

Embodiments of the present invention will be explained in detail with reference to the drawings hereinafter.

### (First Embodiment)

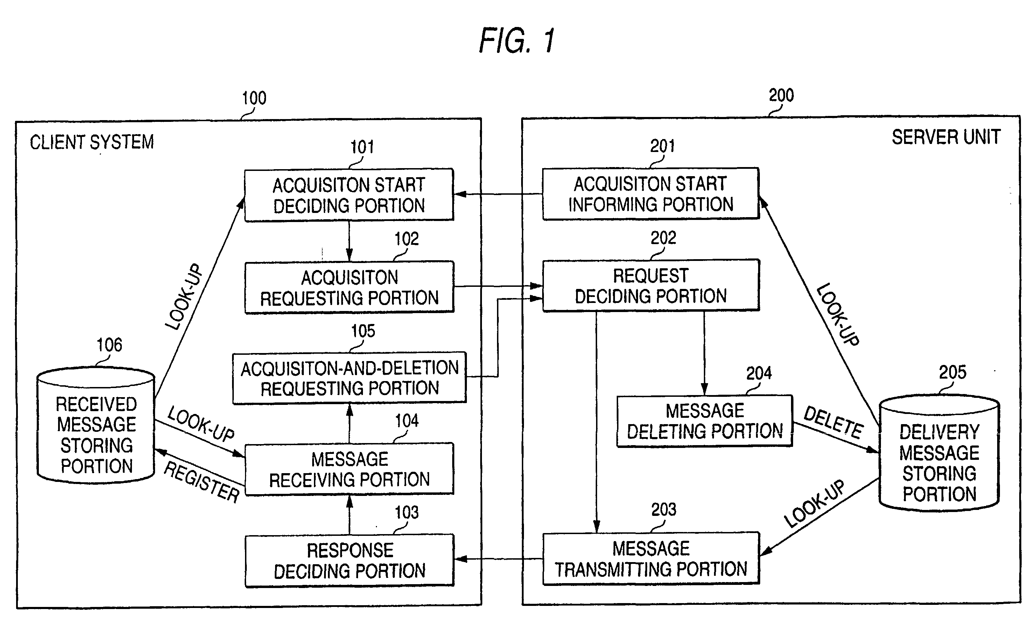

FIG. 1 is a block diagram showing configurations of a client system and a server unit in a message delivery system according to the first embodiment.

The client system 100 comprises an acquisition start deciding portion 101, an acquisition requesting portion 102, a response deciding portion 103, a message receiving portion 104, an acquisition-and-deletion requesting portion 105, and a received message storing portion 106.

If the acquisition start deciding portion 101, when receives an acquisition start notification transmitted by a server unit 200, decides by looking up the received message storing portion 106 that there are empty message storing areas, it sets an initial value as an acquiring request message identifier requesting the acquisition subsequently from the server unit 200 and then requests the acquisition requesting portion 102 of the acquisition of a succeeding message. The message data acquired from the server unit 200 are stored in the received message storing portion 106.

The acquisition requesting portion 102 transmits the message acquiring request to the server unit 200 when the acquisition of the succeeding message is requested. The message acquiring request contains the acquiring request message identifier as the acquiring request information, and requests the transmission of the message designated by the server unit 200.

The response deciding portion 103, when receives the message acquiring response transmitted by the server unit 200, decides a response code contained in the message acquiring request and then informs the message receiving portion 104 of the message data being received normally. In addition, the response deciding portion 103 detects the acquiring notification message identifier to be requested subsequently from the acquisition response information contained in the message acquisition response, and then updates the acquiring request message identifier to request subsequently the acquisition into a detected value of the acquiring notification message identifier.

The message receiving portion 104, when detects the completion of the message reception, registers the received message data into the received message storing portion 106, then sets the received message into the server unit 200 as the deletion request message identifier to request subsequently the deletion, and then requests the acquisition-and-deletion requesting portion 105 of both the acquisition of the next message and the deletion of the received message.

The acquisition-and-deletion requesting portion 105, when requested to acquire the next message and delete the received message, transmits the message acquiring request together with the deletion request information to the server unit 200. The message acquiring request contains the acquiring request message identifier as the acquiring request information and contains the deletion request message identifier as the deletion request information, and requests the server unit 200 of the transmission of the designated message and the deletion of the received message. In this case, the acquisition-and-deletion requesting portion 105 decides whether or not the acquiring request message identifier is the initial value, and then decides that there is no succeeding message if the identifier is the initial value. Thus, the message acquiring request does not contain the acquiring request information, and requests merely the server unit 200 of the deletion of the received message.

The server unit 200 comprises an acquisition start informing portion 201, a request deciding portion 202, a message transmitting portion 203, a message deleting portion 204, and a delivery message storing portion 205.

The acquisition start informing portion 201 demands to acquiure the message by transmitting the calling to the client system 100 as the acquisition start notification when a message to be delivered to the particular client system 100 is accumulated into the delivery message storing portion 205. The message data to be delivered to the client system 100 are stored into the delivery message storing portion 205.

The request deciding portion 202, when receives the message acquiring request transmitted by the client system 200, detects the acquiring request message identifier from the acquiring request information contained in the message acquiring request, and then requests the transmission of the message indicated by the acquiring request message identifier detected by the message transmitting portion 203. Also, the request deciding portion 202 detects the deletion request message identifier from the deletion request contained in the message acquiring request, and then requests the message deleting portion 204 of the deletion of the message indicated by the detected deletion request message identifier.

The message transmitting portion 203, when requested to transmit the message, fetches the message having the acquiring request message identifier designated by the client system 100 from the delivery message storing portion 205, and then transmits the message acquisition response to the client system 100. The message acquisition response contains the message data corresponding to the acquiring request message identifier and the acquiring notification message identifier as the acquisition response information. The acquiring notification message identifier indicates the message to be requested. Since there is no further message to be requested at the time of transmission of the last message data accumulated in the server unit 200, the initial value is informed as the acquiring notification message identifier.

The message deleting portion 204, when requested to delete the message, deletes the message corresponding to the deleting request message identifier designated by the client system 100 from the delivery message storing portion 205.

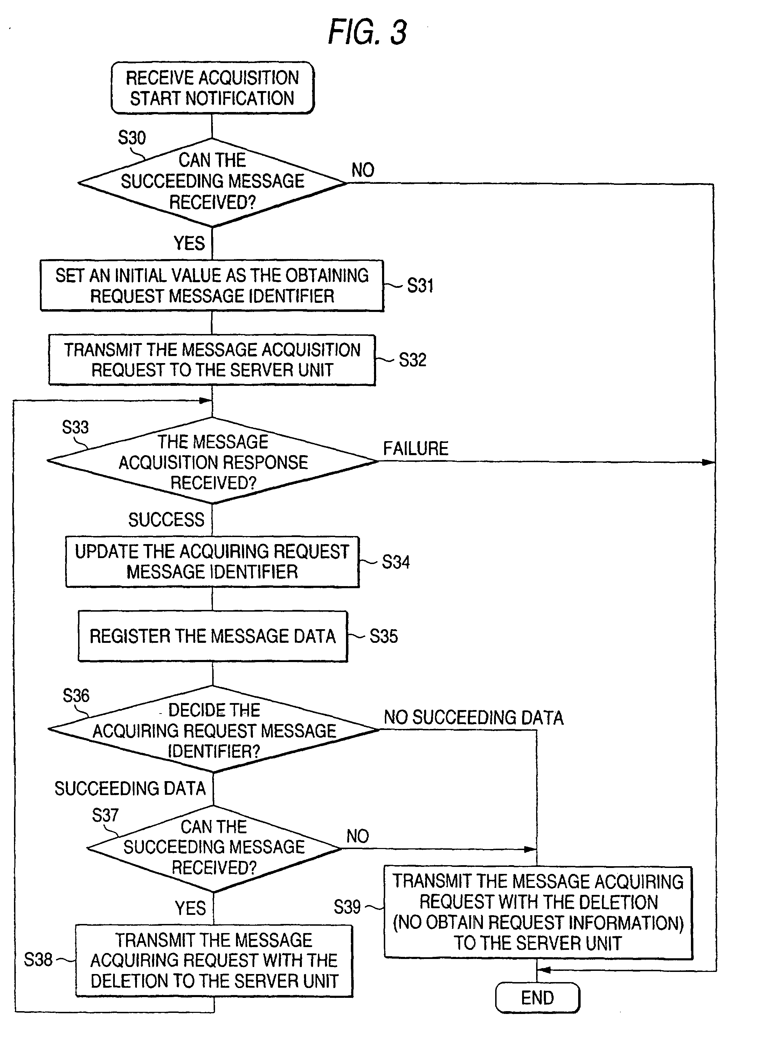

FIG. 3 is a flowchart showing an operation of the client system in the message delivery system in the first embodiment. An operation of the client system 100 for acquiring the message in accordance with the notification from the server unit 200 will be explained with reference to FIG. 3 hereunder.

First, when the client system 100 receives the acquisition start notification from the server unit 200, it looks up the received message storing portion 106 to decide whether or not the succeeding message can be received (step S30).

If the received message storing portion 106 has empty message storing areas and thus the succeeding message can be received (YES in step S30), the initial value is set as the acquiring request message identifier for requesting subsequently the acquisition (step S31). The client system 100 transmits the message acquiring request to the server unit 200 (step S32). In contrast, if the received messages have already been stored up to the maximum size and thus the succeeding message cannot be received (NO in step S30), the process is ended.

Then, the client system 100 receives the message acquisition response from the server unit 200, then decides the response code contained in the message acquisition response. If the client system 100 succeeds to receive the response (success in step S33), it picks up the acquiring notification message identifier designated by the message acquisition response to be requested subsequently, and then updates the acquiring request message identifier for requesting subsequently to acquire to a detected value of the acquiring notification message identifier (step S34). In contrast, if the client system 100 fails to receive the message acquisition response (failure in step S33), the process is ended.

If the reception of the message data in the present message during acquiring has been completed, the received message data is registered in the received message storing portion 106 (step S35). Then, the received message is set as the deletion request message identifier for requesting the deletion.

Then, if the succeeding message identifier is a value other than the initial value, it is decided that the succeeding message to be acquired is present in the server unit 200 (succeeding message is present in step S36). Then, the received message storing portion 106 is referred to decide whether or not the reception of the succeeding message is feasible (step S37).

If the received message storing portion 106 has the empty message storing areas and the succeeding message can be received (YES in step S37), the client system 100 transmits the message acquiring request together with the deletion request information to the server unit 200 (step S38). Then, the process goes to step S33. The message acquiring request contains the acquiring request message identifier as the acquiring request information and contains the deletion request message identifier as the deletion request information, and requests the server unit 200 of the transmission of the succeeding message and the deletion of the received message.

In contrast, if the succeeding message identifier is the initial value, it is decided that the succeeding message to be acquired is not present in the server unit 200 (no succeeding message is present in step S36). Then, the client system 100 transmits the message acquiring request together with the deletion request information to the server unit 200 (step S39). The message acquiring request does not contain the acquiring request information, and requests merely the server unit 200 of the deletion of the received message, but does not request to transmit the succeeding message.

If the received message storing portion 106 does not have the empty message storing areas and the succeeding message cannot be received (NO in step S37), the process goes to step S39.

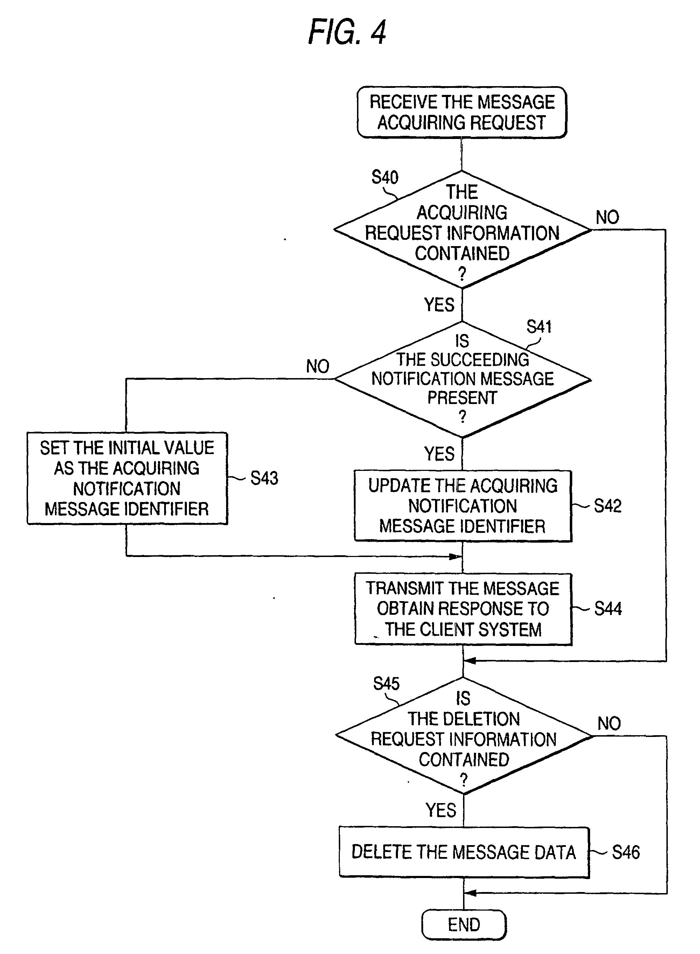

FIG. 4 is a flowchart showing an operation of the server unit in the message delivery system in the first embodiment. An operation performed when the server unit 200 receives the message acquiring request from the client system 100 will be explained with reference to FIG. 4 hereunder.

First, when the server unit 200 receives the message acquiring request from the client system 100, it decides whether or not the acquiring request information is contained (step S40).

If the acquiring request information is contained (YES in step S40), the server unit 200 picks up the message designated by the acquiring request message identifier from the delivery message storing portion 205, and then decides whether or not the picked message is the last message accumulated in the server unit 200 (step S41). In contrast, if the acquiring request information is not contained (NO in step S40), the process goes to step S45.

If the picked message is not the last message accumulated in the server unit 200 and the succeeding message to be requested is present (YES in step S41), the acquiring notification message identifier is updated to the next one (step S42). In contrast, if the picked message is the last message accumulated in the server unit 200 and the succeeding message to be requested is not present (NO in step S41), the initial value is set as the acquiring notification message identifier (step S43).

Then, the server unit 200 transmits the message acquisition response to the client system 100 (step S44). The message acquisition response contains the message data fetched from the delivery message storing portion 205 and the acquiring notification message identifier as the acquisition response information.

The server unit 200 decides whether or not the deletion request information is contained in the message acquiring request received from the client system 100 (step S45).

If the deletion request information is contained (YES in step S45), the message designated by the deletion request message identifier is deleted from the delivery message storing portion 205 (step S47).

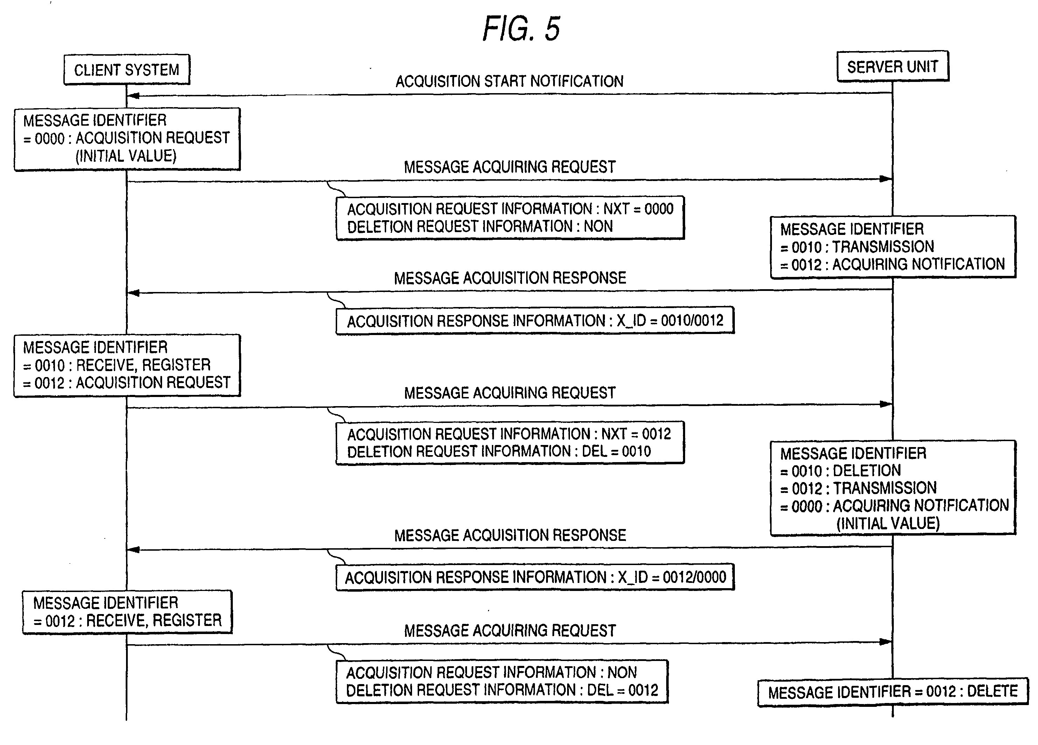

FIG. 5 is a sequence view showing the process between the client system and the server unit in the message delivery system in the first embodiment. An operation of the client system 100 for acquiring the message in accordance with the notification from the server unit 200 will be explained with reference to FIG. 5 hereunder.

First, the server unit 200 transmits the acquisition start notification to the client system 100 when the messages to be delivered to the client system 100 are accumulated.

The client system 100 sets the initial value as the acquiring request message identifier and then transmits the message acquiring request to the server unit 200.

The server unit 200, when receives the message acquiring request, detects that the initial value is set as the acquiring request message identifier, then picks up the first message from the delivery message storing portion 205, and then transmits the message acquisition response to the client system 100. The message acquisition response contains not only the message data but also the acquiring notification message identifier indicating the message to be requested subsequently.

The client system 100, when completes the reception of the message data in the present message during acquiring, registers the received message data in the received message storing portion 106 and then decides whether or not the acquiring notification message identifier designated by the message acquisition response is the initial value. If the identifier is not the initial value, a value of this acquiring notification message identifier is set as the acquiring request message identifier, then sets the received message identifier as the deletion request message identifier, and then transmits the message acquiring request containing the deletion request information to the server unit 200.

The server unit 200, when receives the message acquiring request, detects the acquiring request message identifier contained in the message acquiring request, then picks up the message data designated by the acquiring request message identifier from the delivery message storing portion 205, and then the message acquisition response to the client system 100. If the present message is not the last message accumulated in the server unit 200 and the succeeding message is present, the server unit 200 updates the acquiring notification message identifier indicating the message to be requested and contained in the message acquisition response. In contrast, if the present message is the last message accumulated in the server unit 200 and the succeeding message is not present, the server unit 200 uses the initial value as the acquiring notification message identifier indicating the message to be requested and contained in the message acquisition response. Also, the server unit 200 detects the deletion object message identifier contained in the message acquiring request, and then deletes the message data designated by the deletion request message identifier from the delivery message storing portion 205.

The client system 100, when completes the reception of the message data in the present message during acquiring, registers the received message data in the received message storing portion 106, and then decides whether or not the acquiring notification message identifier designated by the message acquisition response is the initial value. If the identifier is the initial value, the client system 100 decides that there is no message to be acquired subsequently, then sets the received message identifier as the deletion request message identifier, and then transmits the message acquiring request containing the deletion request information but not containing the acquiring request information to the server unit 200.

The server unit 200, when it receives the message acquiring request, detects the deletion request message identifier contained in the message acquiring request, and then deletes the message data designated by the deletion request message identifier from the delivery message storing portion 205.

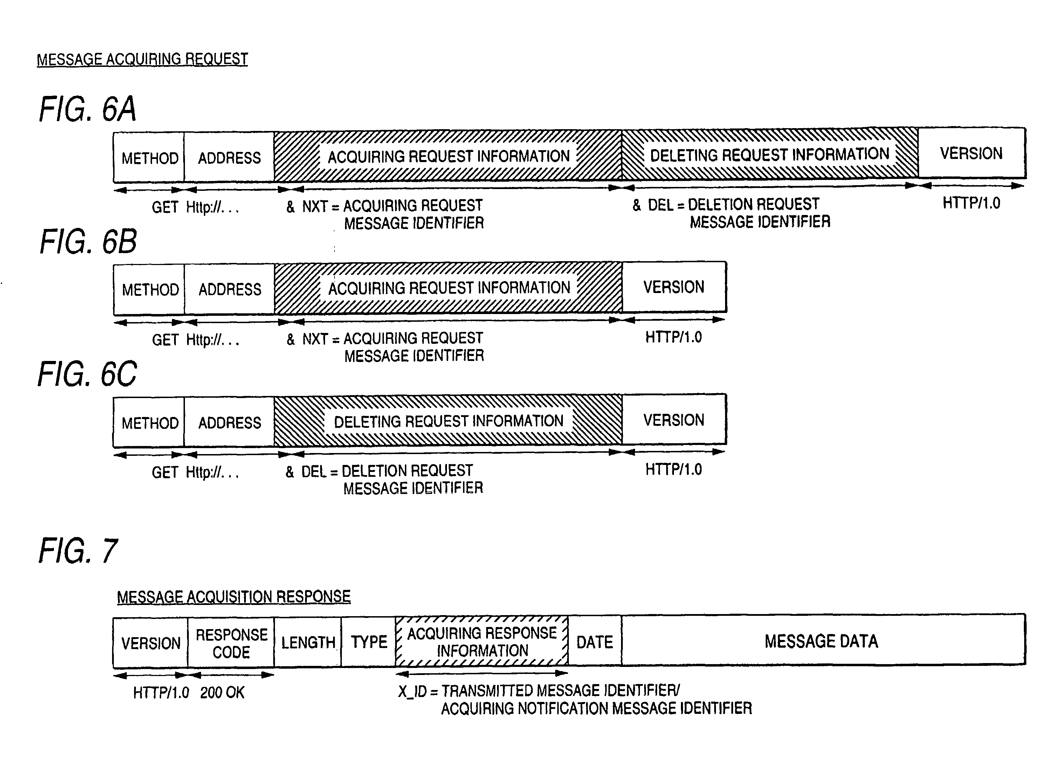

FIG. 6 is a view showing an example of data formats of the message acquiring request transmitted/received between the client system and the server unit used in the message delivery system in the first embodiment.
(A) is a view showing a data format containing the acquiring request information and the deleting request information. This data format consists of method, address, acquiring request information, deleting request information, and version. Boundaries among the address, the acquiring request information, the deleting request information are decided by using a delimiter character "&" and boundaries between other constituent information are decided by using a space. The method can designate GET, POST, etc., and GET is used if the message is acquired from the server. The address designates the server for accumulating the messages and its storing areas. The version designates the used version of HTTP. The acquiring request information contains the acquiring request message identifier, and requests the transmission of the message designated by the server unit. The deleting request information contains the deleting request message identifier, and requests the deletion of the designated message from the server unit.
(B) is a view showing a data format containing the acquiring request information. This data format consists of method, address, acquiring request information, and version. The acquiring request information contains the acquiring request message identifier, and requests the transmission of the message designated by the server unit. The initial value is used as the acquiring request message identifier immediately after the client system 100 receives the acquiring start notification.
(C) is a view showing a data format containing the deleting request information. This data format consists of method, address, deleting request information, and version. The deleting request information contains the deleting request message identifier, and requests the deletion of the designated message from the server unit.

It is apparent that the acquiring request information and the deleting request information can be replaced in order with each other. Other constituent information may be added. The data format of the message acquiring request is not limited to this.

Although the format used when HTTP is applied is illustrated, it is apparent that the present invention can be applied to other protocols.

FIG. 7 is a view showing an example of a data format of the message acquiring request transmitted/received between the client system and the server unit used in the message delivery system in the first embodiment.

This data format consists of version, response code, length, type, acquiring response information, data, and message data. A boundary between Date and the message data is decided by using a line feed code, and boundaries among other constituent information are decided by using a space. The response code denotes the result of the process in the server unit in response to the request from the client system, and indicated the normal or abnormal reason. The length denotes a data size of the message data. The type denotes the media type of the message data, and indicates the text, the image, the sound, etc. The Date indicates the date at the time of transmission. The message data corresponds to the main text data of the message itself accumulated in the server unit. The acquiring response information contains the transmitted message identifier and the acquiring notification message identifier, and designates the message now in transmission and the message to be requested subsequently as the message data. If the message data being now transmitted is the last message accumulated in the server unit, the initial value is used as the acquiring notification message identifier.

It is apparent that the acquiring response information and the type, etc. can be replaced in order with each other. Other constituent information may be added. The data format of the message acquiring response is not limited to this. Also, although the format used when HTTP is applied is illustrated, it is apparent that the present invention can be applied to other protocols.

### (Second Embodiment)

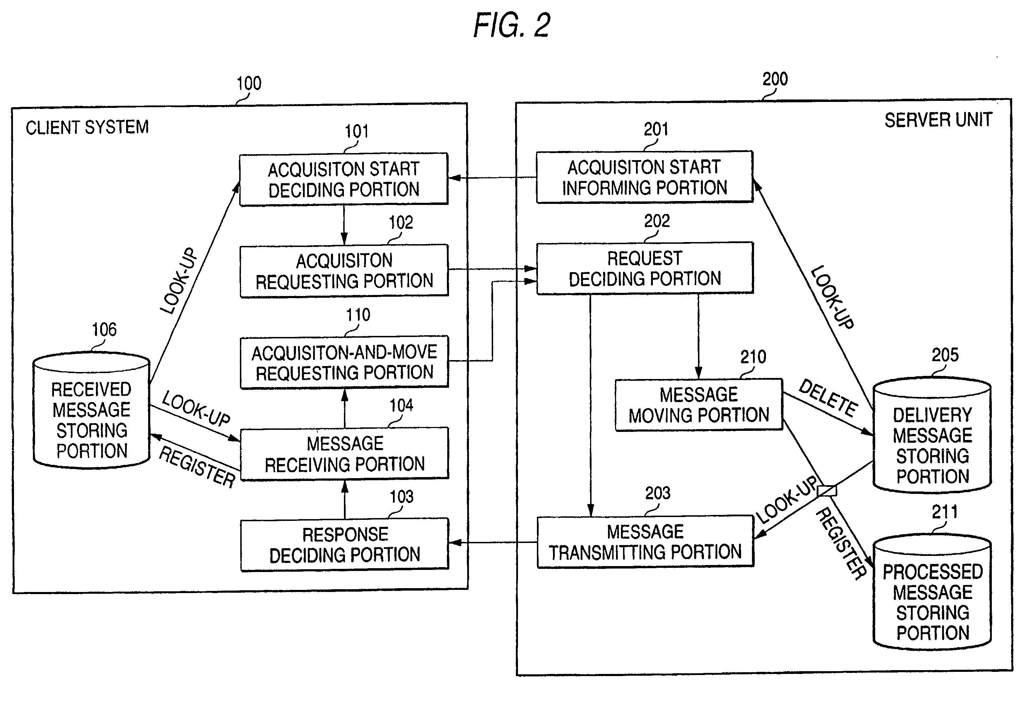

FIG. 2 is a block diagram showing configurations of a client system and a server unit in a message delivery system according to the second embodiment.

The client system 100 of the second embodiment is similar to the first embodiment in that it comprises the acquisition start deciding portion 101, the acquisition requesting portion 102, the response deciding portion 103, the message receiving portion 104, and the received message storing portion 106. In the second embodiment, the acquisition-and-deletion requesting portion 105 is deleted, and an acquisition-and-move requesting portion 110 is added alternatively.

The server unit 200 is also similar to the first embodiment in that it comprises the acquisition start informing portion 201, the request deciding portion 202, the message transmitting portion 203, and the delivery message storing portion 205. In the second embodiment, the message deleting portion 204 is deleted, and a message moving portion 210 is added alternatively. In addition, a processed message storing portion 211 is added.

Constituent elements added newly in the second embodiment will be explained. The acquisition-and-move requesting portion 110 transmits the message acquiring request together with the moving request information to the server unit 200 when the acquisition of the succeeding message and the movement of the received message is requested.

The message acquiring request contains the acquiring request message identifier as the acquiring request information and contains the moving request message identifier as the moving request information, and requests the server unit 200 of the transmission of the designated message and the movement of the received message. In this case, it is decided whether or not the acquiring request message identifier is the initial value, and then decides that there is no succeeding message if the identifier is the initial value. Thus, the message acquiring request does not contain the acquiring request information, and requests merely the server unit 200 of the movement of the received message.

The message moving portion 210, when it is requested to move the message, moves the message indicated by the moving request message identifier designated by the client system 100 from the delivery message storing portion 205 to the processed message storing portion 211.

The message data that have been delivered to the client system 100 are stored in the processed message storing portion 211.

With the above, although several embodiments of the present invention have been explained, it is of course that the present invention is not limited to the technical contents of the above embodiments. That is, followings may be contained in the present invention.

First, in the first and second embodiments, it is decided whether or not the received message storing portion has the empty storing areas. However, it is possible to limit the maximum reception number and then decide based on the number of the received message data in place of size.

Then, it is apparent that writing over the already-read messages, etc. in the received message may be allowed. In this case, functions for performing the setting not to allow the writing over the particular messages, etc. may be added.

Also, older messages may be automatically deleted on the server unit side by limiting the saving period of the delivery messages accumulated in the server unit.

In addition, if the message cannot be acquired by the client system in response to the acquisition start notification from the server unit, it is apparent that the acquisition start notification may be retried by the server unit.

Although the deletion or the movement is performed as the process of the received message designated by the client system, the process is not limited to this. It is apparent that other processes may be designated.

In the second embodiment, it is possible to manage the processed messages by limiting the save period of the processed messages or limiting the number of saved messages.

### Industrial Applicability

According to the message delivery system according to the present invention, it is feasible to provide a message delivery system which does not generate the lack of the message, by making possible to issue an instruction to the server unit from the client system to process a message, which is received by the client system, at a timing when the client system has completed to receive the message as the application, and then performing the message process on the server unit side in compliance with the instruction.

## Claims

1. A message delivery system having a client system (100) being adapted to acquire a message from a server unit (200) in the system by requesting said server unit to transmit the message in compliance with a notification from said server unit,
wherein said client system (100) includes,
a received message storing means (106) for storing messages received from said server unit (200), and
an deciding means (101) for looking up said received message storing means (106) and deciding whether there are empty message storing areas for accommodating a succeeding message;
wherein said server unit (200) includes,
a delivery message storing means (205) for storing messages to be transmitted to said client system (100);
a message transmitting means (203) for transmitting a message stored in the delivery message storing means (205) to said client system in compliance with a request from the client system, and
a message processing means (204, 210) for further processing the message whose reception is completed;
**characterized in that**
said client system (100) includes,
an instruction and message acquisition requesting means (105, 110) being configured to transmit a message acquiring request together with a message processing request to said server unit, wherein said message acquiring request is used to instruct said server unit to transmit a succeeding message, and wherein said message processing request is a message deletion request or a message movement request to instruct said server unit to delete message whose reception is completed, or to move the message whose reception is completed to the processed message storing means (211 ).

2. The message delivery system according to claim 1, wherein said server unit (200) is adapted to hold the message in said delivery message storing means (205) until its deletion or movement is instructed by said client system (100), and to transmit the same message once again in accordance with a message acquiring request from said client system.

## Patentansprüche

1. Nachrichten-Zustellsystem mit einem Client-System (100), das so eingerichtet ist, dass es eine Meldung von einer Server-Einheit (200) in dem System abruft, indem es die Server-Einheit entsprechend einer Benachrichtigung von der Server-Einheit auffordert, die Meldung zu senden,
wobei das Client-System (100) enthält:
eine Speichereinrichtung (106) für empfangene Nachrichten zum Speichern von von der Server-Einheit (200) empfangenen Nachrichten, und
eine Entscheidungseinrichtung (101), die die Speichereinrichtung für empfangene Nachrichten (106) durchsucht und entscheidet, ob leere Nachrichten-Speicherbereiche zum Aufnehmen einer folgenden Nachricht vorhanden sind;
wobei die Server-Einheit (200) enthält:
eine Speichereinrichtung (205) für Zustelinachrichten zum Speichern von zu dem Client-System (100) zu sendenden Nachrichten;
eine Nachrichten-Sendeeinrichtung (203), die ein in der Speichereinrichtung (205) für Zustellnachrichten gespeicherte Nachricht entsprechend einer Aufforderung von dem Client-System zu dem Client-System sendet, und
eine Nachrichten-Verarbeitungseinrichtu ng (204, 210) zum weiteren Verarbeiten der Nachricht, deren Empfang abgeschlossen ist;
**dadurch gekennzeichnet, dass**:
das Client-System (100) enthält:
eine Anweisungs-und-Nachrichtungserfassung-Aufforderungseinrichtung (105, 110), die so ausgeführt ist, dass sie eine Nachrichten-Erfassungsaufforderung zusammen mit einer Nachrichten-Verarbeitungsaufforderung zu der Server-Einheit sendet, wobei die Nachrichten-Erfassungsaufforderung verwendet wird, um die Server-Einheit anzuweisen, eine anschließende Nachricht zu senden, und wobei die Nachrichten-Verarbeitungsaufforderung eine Nachrichten-Löschaufforderung oder eine Nachrichten-Verschiebeaufforderung ist, die die Server-Einheit anweist, die Nachricht, deren Empfang abgeschlossen ist, zu löschen oder die Nachricht, deren Empfang abgeschlossen ist, in die Speichereinrichtung (211) für verarbeitete Nachrichten zu verschieben.

2. Nachrichten-Zustellsystem nach Anspruch 1, wobei die Server-Einheit (200) so eingerichtet ist, dass sie die Nachricht in der Speichereinrichtung (205) für Zustellnachrichten hält, bis ihre Löschung oder Verschiebung durch das Client-System (100) angewiesen wird, und die gleiche Nachricht entsprechend einer Nachrichten-Erfassungsaufforderung von dem Client-System noch einmal sendet.

## Revendications

1. Système de remise de messages comportant un système client (100) étant adapté pour acquérir un message provenant d'une unité serveur (200) dans le système en demandant à ladite unité serveur de transmettre le message en conformité avec une notification provenant de ladite unité serveur,
dans lequel ledit système client (100) inclut,
un moyen de mémorisation de messages reçus (106) pour mémoriser les messages reçus de ladite unité serveur (200), et
un moyen de décision (101) pour consulter ledit moyen de mémorisation de messages reçus (106) et pour décider s'il existe des zones de mémorisation de message vides pour recevoir un message suivant ;
dans lequel ladite unité serveur (200) inclut,
un moyen de mémorisation de messages de remise (205) pour mémoriser les messages qui doivent être transmis audit système client (100) ;
un moyen de transmission de messages (203) pour transmettre un message mémorisé dans le moyen de mémorisation de messages de remise (205) audit système client en conformité avec une demande provenant du système client, et
un moyen de traitement de message (204, 210) pour traiter de plus le message dont la réception est terminée ;
**caractérisé en ce que**
ledit système client (100) inclut,
un moyen de demande d'acquisition d'instruction et de message (105,110) qui est configuré pour transmettre une demande d'acquisition de message associée à une demande de traitement de message à ladite unité serveur, dans lequel ladite demande d'acquisition de message est utilisée pour ordonner à ladite unité serveur de transmettre un message suivant, et dans lequel ladite demande de traitement de message est une demande d'annulation de message ou une demande de déplacement de message pour ordonner à ladite unité serveur d'annuler le message dont la réception est terminée, ou de déplacer le message dont la réception est terminée vers le moyen de mémorisation de messages traités (211).

2. Système de remise de messages selon la revendication 1, dans lequel ladite unité serveur (200) est adaptée pour conserver le message dans ledit moyen de mémorisation de messages de remise (205) jusqu'à ce que son annulation ou son déplacement soit ordonné par ledit système client (100), et pour transmettre le même message de nouveau en conformité avec une demande d'acquisition de message provenant dudit système client.
